# EUROPEAN PATENT SPECIFICATION

(11) **EP 2 072 283 B1**
(45) Date of publication and mention of the grant of the patent: **28.07.2010**
(21) Application number: 08170818.2
(22) Date of filing: 05.12.2008
(51) Int. Cl.: B60C 1/00, C08K 7/02, C08K 9/04, C08L 7/00, B60C 15/06

(54) **Tire with component containing aramid fibers**
Reifen mit Komponente, die Aramidfasern enthält
Pneu avec composant contenant des fibres d'aramide

(30) Priority: 18.12.2007 US 958467
(43) Date of publication of application: 24.06.2009
(73) Proprietor: The Goodyear Tire & Rubber Company, Akron, OH 44316-0001 (US)
(72) Inventor: Lechtenboehmer, Annette, L-9048, Ettelbruck (LU); Wieczorek, David Gilbert, 8140, Bridel (LU)
(74) Representative: Kutsch, Bernd

(56) References cited:
- EP-A- 0 329 589
- EP-A- 1 454 765
- WO-A-2006/087161
- WO-A-2007/042229
- JP-A- 5 155 207
- US-B1- 6 516 847

## Description

### Background of the Invention

A tire is a composite of several components each serving a specific and unique function yet all synergistically functioning to produce the desired performance. One important component is the carcass ply. The carcass ply is a continuous layer of rubber-coated parallel cords which extends from bead to bead and functions as a reinforcing element of the tire. The ply is turned-up around the bead, thereby locking the bead into the assembly or carcass. In the immediate proximity of the carcass ply turn-up is an apex. The apex includes a rubber wedge located in the lower sidewall region above the bead and is bonded to and encased by the carcass plies. The apex also includes the area located between the lower sidewall rubber and the axially outer side of the carcass ply turn-up. Between the bead and apex, a flipper may be included, and between the carcass ply and chafer, a chipper may be included. The apex serves to stiffen the area near the bead in the lower sidewall. The flipper serves as an interface between the bead and carcass ply, to prevent erosion of the carcass ply and/or bead due to interfacial stresses. The chipper serves as an interface between the carcass ply and the rubber chafer contacting the wheel rim.

The apex, flipper and chipper performance may improve when reinforced with short fibers having a specific orientation. For example, an apex with radially oriented fibers may improve the bending stiffness of the lower sidewall of the tire. Known techniques for orienting reinforcing short fibers in an elastomeric material are generally methods for orienting fibers in a composite in a direction which is consistent with and parallel to the material flow direction in processing equipment. However, such fiber orientation is often difficult to achieve in practice due to poor dispersion and/or adhesion of the fibers to the rubber. There is, therefore, a need for an improved apex, flipper, or chipper with oriented short fibers.

### Summary of the Invention

The present invention is directed to a tire according to claim 1.

Dependent claims refer to preferred embodiments of the invention.

### Brief Description of the Drawings

FIG. 1 shows a cross-section of a portion of a tire according to one embodiment of the present invention.
FIG. 2 is a graph of stress ratio vs strain measured for two samples.
FIG. 3 is a graph of stress ratio vs strain measured for three samples.

### Detailed Description of the Invention

There is disclosed a pneumatic tire comprising at least one of a apex, flipper, and chipper the at least one of an apex and flipper comprising a rubber composition, the rubber composition comprising a diene based elastomer and from 1 to 50, preferably 5 to 40 parts, by weight, per 100 parts by weight of elastomer, of an aramid fiber preferably having a length ranging from 0.5 to 20 mm, more preferably from 1 to 10 mm, and preferably having a thickness ranging from 2 to 30 microns, more preferably from 5 to 15 microns, said fiber having disposed on at least part of its surface a composition comprising an aliphatic fatty acid or a microcrystalline wax (preferably a synthetic microcrystalline wax); a Bunte salt; a polysulfide comprising the moiety -[S]ₙ or - [S]ₒ-Zn-[S]ₚ wherein each of o and p is from 1 to 5 (such as 1, 2, 3, 4 or 5), o + p = n, and n = 2 to 6 (such as 2, 3, 4, 5 or 6); and sulfur or a sulfur donor.

Suitable aramid fibers are described for example in WO-A- 2007/042229 and WO-A- 2006/087161.

In one embodiment, the short aramid fiber has a length ranging from 1 to 10 mm. In another embodiment, the short aramid fiber has a thickness ranging from 5 to 15 microns.

In one embodiment the aliphatic fatty acid or the preferably synthetic microcrystalline wax is present in a mount ranging from 10 to 90 or from 30 to 70 percent by weight, based on the weight of the fiber, the fatty acid or wax, the Bunte salt, and the polysulfide.

In one embodiment, the aliphatic fatty acid or synthetic microcrystalline wax is an aliphatic fatty acid. In another embodiment the aliphatic fatty acid is stearic acid. In one embodiment, the synthetic microcrystalline wax is polyethylene wax.

In one embodiment, the Bunte salt has the formula (H)ₘ-(R¹-S-SO₃-M⁺)ₘ . xH₂O wherein m is 1 or 2, m' is 0 or 1, and m + m' =2; x is in a range from 0 to 3, M is selected from Na, K, Li, ½ Ca, ½ Mg, and ⅓ Al, and R¹ is selected from C1 alkylene to C12 alkylene, C1 alkoxylene to C12 alkoxylene, and C7 aralkylene to C12 aralkylene. In a preferred embodiment, the Bunte salt has m=2, m' = 0, and R1 is selected from C1 alkylene to C12 alkylene. In a preferred embodiment, the Bunte salt is disodium hexamethylene-1,6-bis(thiosulfate) dihydrate.

In one embodiment, the amount of the Bunte salt ranges from 0.25 to 25 weight percent, based on the weight of the plain fiber. In a preferred embodiment, the amount of the Bunte salt ranges from 2 to 10 weight percent, based on the weight of the plain fiber.

In one embodiment, the polysulfide is selected from the group consisting of dicyclopentamethylene thiuram tetrasulfide, bis-3-triethoxysilylpropyl tetrasulfide, alkyl phenol polysulfide, zinc mercaptobenzothiazole, and 2-mercaptobenzothiazyl disulfide. In one embodiment, the polysulfide in 2-mercaptobenzothiazyl disulfide.

In one embodiment, the amount of the polysulfide ranges from 0.01 to 15 weight percent, based on the weight of the plain fiber. In a preferred embodiment, the amount of the polysulfide ranges from 0.1 to 3 weight percent, based on the weight of the fiber.

In one embodiment, the sulfur may be powdered sulfur, precipitated sulfur and insoluble sulfur. In one embodiment, the sulfur donor is tetramethylthiuram disulfide, tetraethylthiuram disulfide, tetrabutylthiuram disulfide, dipentamethylene thiuram hexasulfide, dipentamethylene thiuram tetrasulfide, dithiodimorpholine, or mixtures thereof.

In one embodiment, the amount of the sulfur or sulfur donor ranges from 0.001 to 10 weight percent, based on the weight of the fiber. In one embodiment, the amount of the sulfur or sulfur donor ranges from 0.01 to 2.5 or 0.1 to 2.5 weight percent, based on the weight of the fiber.

In one embodiment, the combination of the Bunte salt, the polysulfide, and the sulfur or sulfur donor is present in an amount ranging from 0.5 to 30 percent by weight, based on the weight of the plain fiber. In a preferred embodiment, the combination of the Bunte salt, the polysulfide, and the sulfur or sulfur donor is present in an amount ranging from 1 to 20 percent by weight, based on the weight of the fiber. In a further preferred embodiment, the combination of the Bunte salt, the polysulfide, and the sulfur or sulfur donor is present in an amount ranging from 2 to 8 percent by weight, based on the weight of the fiber.

In one embodiment, an aramid fiber having a length ranging from 1 to 10 mm and having a thickness ranging from 5 to 15 microns, said fiber having disposed on at least part of its surface a composition comprising an aliphatic fatty acid; a Bunte salt; a polysulfide comprising the moiety -[S]ₙ or -[S]ₒ-Zn-[S]ₚ, wherein each of o and p is 1-5, o + p = n, and n = 2-6; and sulfur or a sulfur donor, is present in the rubber composition in a concentration ranging from 1 to 50 parts by weight of fiber per 100 parts by weight of diene based elastomer (phr). In another embodiment, the short fiber is present in the rubber composition in a concentration ranging from 5 to 50 parts by weight of fiber per 100 parts by weight of diene based elastomer (phr). In another embodiment, the short fiber is present in the rubber composition in a concentration ranging from 10 to 30 parts by weight of fiber per 100 parts by weight of diene based elastomer (phr).

The rubber composition may be used with rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-potyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tincoupled star-branched polymers. The preferred rubber or elastomers are polyisoprene (natural or synthetic), polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The cis 1,4-polyisoprene and cis 1,4-polyisoprene natural rubber are well known to those having skill in the rubber art.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica is used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as silicas commercially available from PPG Industries under the Hi-Sil trademark with designations 210, 243 silicas available from Rhodia, with, for example, designations of Z1165MP and Z165GR and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including particulate fillers including ultra high molecular weight polyethylene (UHMWPE), crosslinked particulate polymer gels including those disclosed in US-A- 6,242,534; US-A-6,207,757; US-A- 6,133,364; US-A- 6,372,857; US-A- 5,395,891; or US-A-6,127,488, and plasticized starch composite filler including that disclosed in US-A- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z-Alk-Sₙ-Alk-Z III

in which Z is selected from the group consisting of 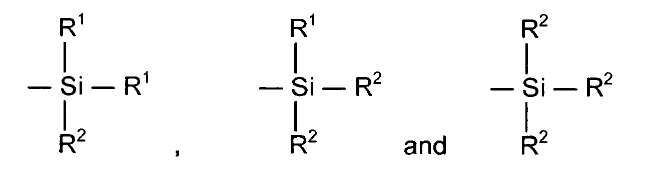 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.
In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula III, Z may be 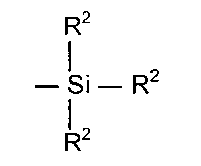 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount ranges from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. A primary accelerator. The primary accelerator(s) are used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition is milled, calendared or extruded to form the apex, flipper, or chipper. The formed component will have the short fibers with an orientation in the direction of processing, that is, a substantial portion of the fibers will generally be oriented in a direction which is consistent with and parallel to the material flow direction in the processing equipment. The rubber composition will have a degree of anisotropy, that is, a modulus measured in a direction consistent with the processing direction will be greater than that measured in a direction perpendicular to the processing direction.
The rubber composition is incorporated into an apex, flipper or chipper.

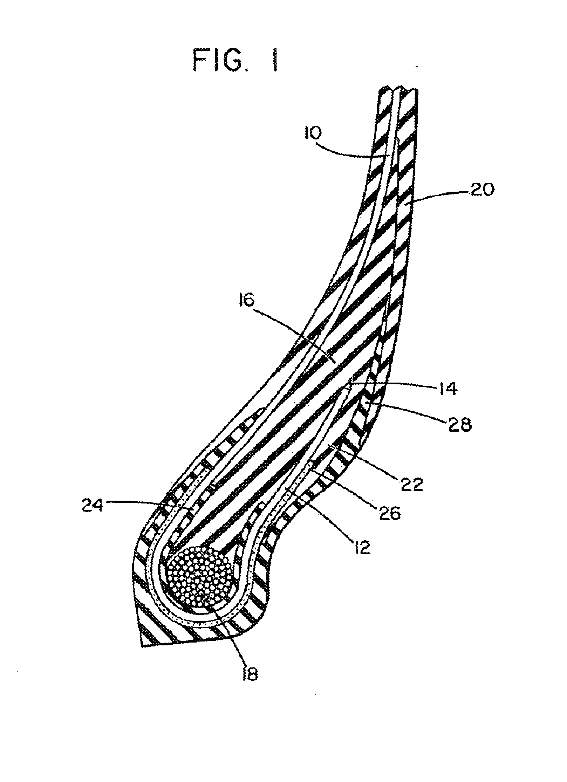

With reference now to Figure 1, a tire according to the invention contains a carcass ply 10 with a turn-up portion 12 and a terminal end 14. The apex 16 is in the immediate proximity of the carcass ply turn-up 14 including the area above the bead 18 and is encased by the carcass ply 10 and carcass ply turn-up 12 or sidewall compound 20. The apex also includes the area 22 located between the lower sidewall 20 and the axially outer side of the carcass ply turn-up 12. The interface between the bead 18 and the carcass ply 10 is a flipper 24. Located outside of the carcass ply 10 and extending in an essentially parallel relationship to the carcass ply 10 is the chipper 26. Located around the outside of the bead 18 is the chafer 28 to protect the carcass ply 12 from the rim (not shown), distribute flexing above the rim, and seal the tire. At least one of apex 16, flipper 24, or chipper 26 comprises the rubber composition as described herein.

In one embodiment, the component is a flipper. In prior art applications, a flipper typically comprises textile cord. In such a flipper application, the cord cannot be oriented in a zero degree radial direction to the radial direction of the tire, due to the increase in radius experienced at the bead during tire build. Typically then, the cords are placed at a 45 degree angle with respect to the radial direction of the tire, to allow for the radius increase and deformation of the flipper during tire build; see for example, US-A- 6,659,148. By contrast, a with the short fiber composition of the present invention, the flipper may be constructed such that the short fibers may be oriented at zero degrees or about zero degrees with respect to the radial direction of the tire. This is desirable to provide additional support at the bead to counteract the directional stresses experienced at the bead. Thus, the flipper of the present invention is not restricted from a zero degree orientation, but may in one embodiment exist with the short fibers substantially oriented in an angle ranging from 0 to 90 degrees with respect to the radial direction of the tire. By substantially oriented, it is meant that the flipper compound is disposed such that with regard to the dimension of the flipper corresponding to that parallel to the direction of propagation through the flipper's fabrication process (i.e. calendar or extruded), that dimension may be oriented at an angle ranging from 0 to 90 degrees with respect to the radial direction of the tire. In another embodiment, the flipper may be disposed with the fibers oriented at an angle ranging from 0 to 45 degrees with respect to the radial direction of the tire. In another embodiment, the flipper may be disposed with the fibers oriented at an angle ranging from 0 to 20 degrees with respect to the radial direction of the tire. In another embodiment, the flipper may be disposed with the fibers oriented at an angle ranging from 0 to 10 degrees with respect to the radial direction of the tire.

The pneumatic tire of the present invention may be a race tire, passenger tire, aircraft tire, agricultural, earthmover, off-the-road, or truck tire. In one embodiment, the tire is a passenger or truck tire. The tire may be a radial or bias.

Vulcanization of the pneumatic tire of the present invention is generally carried out at conventional temperatures ranging from 100°C to 200°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Example 1

In this example, the effect of adding a short fiber to a flipper rubber composition according to the present invention is illustrated. Rubber compositions containing diene based elastomer, fillers, process aids, antidegradants, and curatives were prepared following recipes as shown in Table 1, with all amounts given in parts by weight per 100 parts by weight of base elastomer (phr). Sample 1 contained no short fiber and served as a control. Sample 2 included Sulfron® 3000 short fiber and is representative of the present invention.

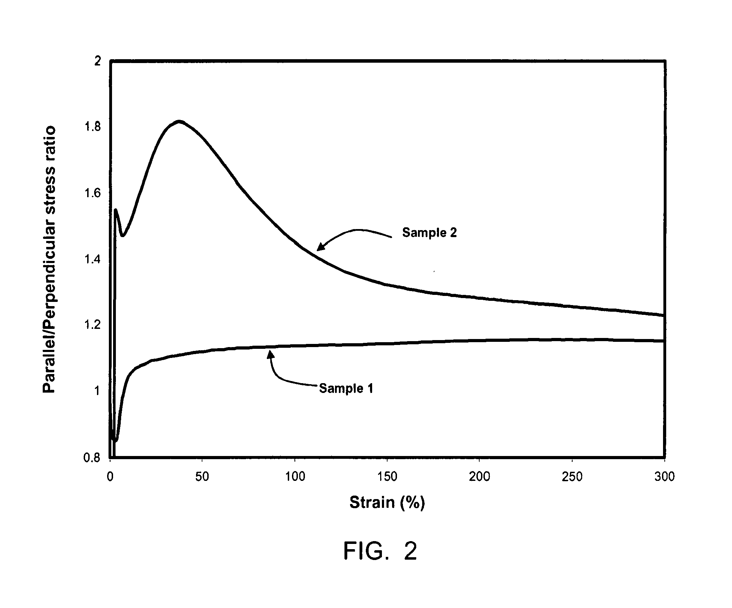

Rubber samples were milled into a sheet and cut into tensile test specimens. Tensile test specimens were cut in two orientations, one with the test pulling direction parallel with the milling direction of the specimen, and one with the test pulling direction perpendicular with the milling direction of the specimen. In this way, the effect of fiber orientation (generally in the direction of milling) and thus the anisotropy of the rubber composition was measured. The tensile samples were then measured for stress at various strains. A stress ratio, defined as the (stress measured in the direction parallel to the milling direction)/(stress measured in the direction perpendicular to the milling direction) was then calculated for each strain. The results of the stress ratio versus strain are shown in FIG. 2.

**Table 1**

| **Nonproductive Mix Stage** | | |
|---|---|---|
| Sample No. | 1 | 2 |
| Natural Rubber | 100 | 100 |
| Carbon Black 1 | 57 | 50 |
| Resin² | 3.5 | 3.5 |
| Antioxidants³ | 4.25 | 4.25 |
| Paraffinic oil | 2 | 0 |
| Zinc Oxide | 8 | 8 |
| Stearic Acid | 2 | 0 |
| Silica⁴ | 8.6 | 8.6 |
| Short fibers⁵ | 0 | 15 |

| **Productive Mix Stage** | | |
|---|---|---|
| HMMM^{b} | 4 | 4 |
| Accelerator⁷ | 1.05 | 1.05 |
| Insoluble sulfur | 5 | 5 |
| Retarder⁸ | 0.2 | 0.2 |

| | | |
|---|---|---|
| ¹ HAF type ² Phenol-formaldehyde type ³ p-phenylene diamine and quinoline types ⁴ surface area 125 m2/g ⁵ Sulfron® 3000, blend of 57.4% aramid short fibers (length 3 mm, diameter 12 microns) with 36.8% stearic acid and 5.8% treatment. ⁶ Hexamethoxymethylmelamine (HMMM) on a silica carrier ⁷ sulfenamide type ⁸ phthalimide type | | |

As seen in FIG. 2, the stress ratio for Sample 2 containing the short fibers shows a maximum at 40 to 50 percent strain, indicating a strong anisotropic reinforcing effect of the fibers in the sample. Such anisotropy is important for applications such as apexes, flippers, and chippers where anisotropic reinforcement is advantageous due to the directional stresses experienced by these tire components at low strains. By comparison, control sample 1 with no fiber shows no such anisotropy.

### Example 2

In this example, the effect of adding a short fiber to a flipper rubber composition according to the present invention is illustrated. Rubber compositions containing diene based elastomer, fillers, process aids, antidegradants, and curatives were prepared following recipes as shown in Table 1, with all amounts given in parts by weight per 100 parts by weight of base elastomer (phr). Sample 3 contained no short fiber and served as a control. Sample 4 included Sulfron® 3000 short fiber and is representative of the present invention. Sample 5 included short aramid fiber treated with nylon and is a comparative sample.

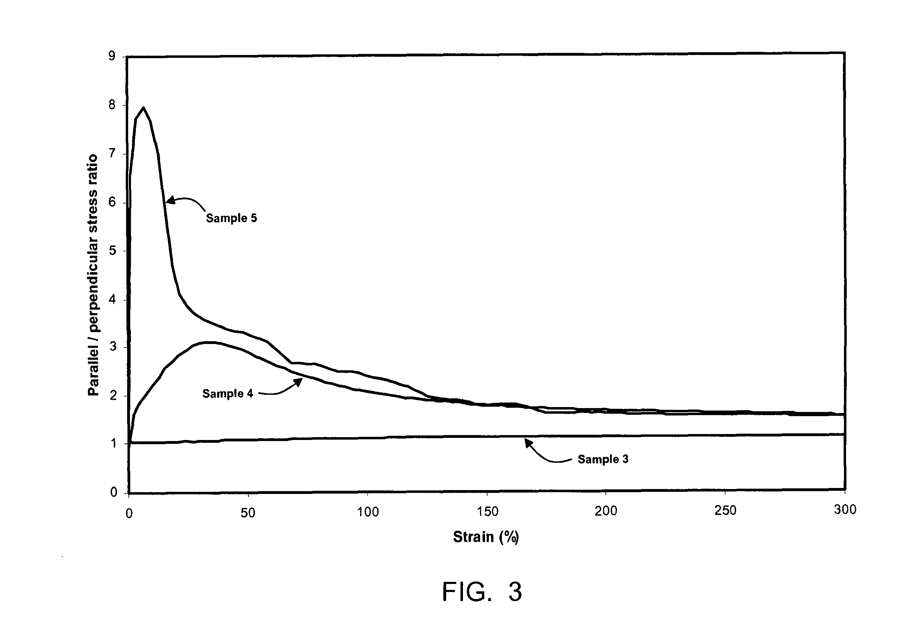

Rubber samples were milled into a sheet and cut into tensile test specimens. Tensile test specimens were cut in two orientations, one with the test pulling direction parallel with the milling direction of the specimen, and one with the test pulling direction perpendicular with the milling direction of the specimen. In this way, the effect of fiber orientation (generally in the direction of milling) and thus the anisotropy of the rubber composition was measured. The tensile samples were then measured for stress at various strains. A stress ratio, defined as the (stress measured in the direction parallel to the milling direction)/(stress measured in the direction perpendicular to the milling direction) was then calculated for each strain. The results of the stress ratio versus strain are shown in FIG 3.

**Table 2**

| **Nonproductive Mix Stage** | | | |
|---|---|---|---|
| Sample No. | 3 | 4 | 5 |
| Natural Rubber | 100 | 100 | 100 |
| Carbon Black ¹ | 40 | 25 | 32.5 |
| Antioxidant² | 1 | 1 | 1 |
| Process Oil³ | 2 | 2 | 2 |
| Zinc Oxide | 5 | 5 | 5 |
| Stearic Acid | 0.5 | 0.5 | 0.5 |
| Short fiber⁴ | 0 | 20.0 | 0 |
| Short fiber⁵ | 0 | 0 | 10 |

| **Productive Mix Stage** | | | |
|---|---|---|---|
| Antioxidants⁶ | 2.5 | 2.5 | 2.5 |
| Insoluble sulfur | 1.75 | 1.75 | 1.75 |
| Accelerator⁷ | 1.35 | 1.35 | 1.35 |

| | | | |
|---|---|---|---|
| ¹ ASTM N-347 ² quinoline type ³ Low polycyclic aromatic (PCA) type ⁴ Sulfron 3000, blend of 57.4% aramid short fibers (length 3 mm, diameter 12 microns) with 36.8% stearic acid and 5.8% treatment. ⁵ Nylon coated aramid short fibers ⁶ p-phenylene diamine types ⁷ sulfenamide type | | | |

As seen in FIG. 3, the stress ratio for Samples 4 and 5 containing the short fibers shows a maximum at low strain, indicating a strong anisotropic reinforcing effect of the fibers in these samples. However, Sample 4 containing the aramid short fibers treated according to the present invention shows a peak at higher strain with a much broader yield as compared with Sample 5, wherein a sharp yield is observed at a lower strain. Such behavior indicates that the inventive Sample 4 demonstrates superior adhesion of the short fibers to the rubber matrix, as illustrated by the broad yield peak at relatively higher strain. By contrast, the sharp yield at relatively lower strain for Sample 5 demonstrates much poorer adhesion by fibers in Sample 5. Such anisotropy as demonstrated by Sample 4 is important for applications such as apexes, flippers, and chippers where anisotropic reinforcement along with good fiber adhesion is advantageous due to the directional stresses experienced by these tire components at low strains. The superior adhesion and broad yield at low strain for the inventive Sample 4 as compared to Sample 5 is surprising and unexpected. Typically, short fibers show behavior demonstrated by Sample 5, with a sharp yield at low strain, indicating poor adhesion and consequent inability to utilize any anisotropy in the compound at strains typically seen in apex, flipper and chipper applications. By contrast, Sample 4 according to the present invention shows much superior adhesion and a broad yield at higher strain, indicating that the compound sample will better perform in an apex, flipper or chipper application. By further comparison, control Sample 3 with no fiber shows no such anisotropy.

In one embodiment, the rubber composition of the present invention has a stress ratio greater than 1.5 at 30 to 50 percent strain. In one embodiment, the rubber composition has a stress ratio greater than 2 at 30 to 50 percent strain.

### Example 3

This example illustrates the effect of using a flipper comprising a rubber composition of the present invention. Three tires were having identical mass were made, each with different flipper constructions. Tire 1 was made with a flipper with conventional reinforcement cords. Tire 2 was made with a flipper with a rubber compound having short oriented fibers according to the present invention. Tire 3 was made with a flipper having an rubber compound without fibers or cords. The tires were measured for tangent stiffness at the nominal load of the tire, with measurement at a load of 492 kg for a deflection of 20 mm. The results are shown in Table 3.

**Table 3**

| Tire No. | Flipper Reinforcement | Vertical Stiffness (N/mm2) |
|---|---|---|
| 1 | Cords | 278 |
| 2 | Short Fiber | 271 |
| 3 | None | 264 |

As shown in Table 3, a tire made with a flipper of the present invention shows good vertical stiffness, between that of the cord reinforced flipper and the unreinforced flipper.

## Claims

1. A tire comprising at least one component selected from the group consisting of apexes, flippers and chippers, the at least one component comprising a rubber composition, the rubber composition comprising a diene based elastomer and from 1 to 50 parts by weight, per 100 parts by weight of elastomer, of aramid fibers, said fibers having disposed on at least part of their surface a composition comprising an aliphatic fatty acid or a microcrystalline wax; a Bunte salt; a polysulfide comprising the moiety -[S]ₙ or -[S]ₒ-Zn-[S]ₚ, wherein each of o and p is in a range of from 1 to 5, o + p = n, and n is in a range of from 2 to 6; and sulfur or a sulfur donor.

2. The tire of claim 1 wherein the aliphatic fatty acid or microcrystalline wax is stearic acid or polyethylene wax.

3. The tire of claim 2 wherein from 10 to 90 percent by weight, alternatively from 30 to 70 percent by weigh, of the total of the fibers, stearic acid, Bunte salt, polysulfide, and sulfur or sulfur donor is the stearic acid.

4. The tire of at least one of the previous claims wherein the Bunte salt is disodium hexamethylene-1,6-bis(thiosulfate)dihydrate.

5. The tire of at least one of the previous claims wherein the amount of the Bunte salt ranges from 0.25 to 25 weight percent, alternatively 2 to 10 weight percent, based on the weight of the fiber.

6. The tire of at least one of the previous claims wherein the polysulfide is 2-mercaptobenzothiazyl disulfide.

7. The tire of at least one of the previous claims wherein the amount of the polysulfide ranges from 0.01 to 15 weight percent, alternatively from 0.1 to 3 weight percent, based on the weight of the fiber.

8. The tire of at least one of the previous claims wherein the amount of sulfur or sulfur donor ranges from 0.001 to 10 weight percent, alternatively from 0.1 to 2.5 weight percent, based on the weight of the fibers.

9. The tire of at least one of the previous claims wherein the component is a flipper.

10. The tire of claim 9 wherein the flipper is disposed with the fibers at least substantially oriented in an angle ranging from 0 to 90 degrees, alternatively from 0 to 10 degrees, with respect to the radial direction of the tire.

11. The tire of at least one of the previous claims wherein the rubber composition of the present invention has a stress ratio greater than 1.5 at 30 to 50 percent strain.

12. The tire of claim 10 wherein the rubber composition has a stress ratio greater than 2 at 30 to 50 percent strain.

13. The tire of at least one of the previous claims wherein the aramid fibers have a length ranging from 0.5 to 20 mm and having a thickness ranging from 2 to 30 microns.

14. The tire of at least one of the previous claims wherein the rubber composition comprises 5 to 40 parts by weight, per 100 parts by weight of elastomer, of aramid fibers.

15. The tire of at least one of the previous claims wherein the aramid fibers have a length ranging from 1 to 10 mm and/or a thickness ranging from 5 to 15 microns.

## Patentansprüche

1. Reifen, umfassend mindestens ein Bauteil ausgewählt aus der aus Kernprofilen, Wulstfahnen und Wulstverstärkern bestehenden Gruppe, wobei das mindestens eine Bauteil eine Kautschukzusammensetzung umfasst, wobei die Kautschukzusammensetzung ein dienbasiertes Elastomer und 1 bis 50 Gewichtsteile, je 100 Gewichtsteile Elastomer, an Aramidfasern umfasst, wobei die Fasern eine auf mindestens einem Teil ihrer Oberfläche angebrachte Zusammensetzung aufweisen, umfassend eine aliphatische Fettsäure oder ein mikrokristallines Wachs; ein Bunte-Salz; ein Polysulfid, umfassend den Anteil -[S]ₙ oder -[S]ₒ-Zn-[S]ₚ, wobei jedes von o und p in einem Bereich von 1 bis 5 liegt, o + p = n, und n in einem Bereich von 2 bis 6 liegt; und Schwefel oder einen Schwefelspender.

2. Reifen nach Anspruch 1, wobei die aliphatische Fettsäure oder das mikrokristalline Wachs Stearinsäure oder Polyethylenwachs ist.

3. Reifen nach Anspruch 2, wobei 10 bis 90 Gewichtsprozent, alternativ 30 bis 70 Gewichtsprozent, der Gesamtheit von Fasern, Stearinsäure, Bunte-Salz, Polysulfid und Schwefel oder Schwefelspender die Stearinsäure ist.

4. Reifen nach mindestens einem der vorgenannten Ansprüche, wobei das Bunte-Salz Dinatrium-hexamethylen-1,6-bis(thiosulfat)dihydrat ist.

5. Reifen nach mindestens einem der vorgenannten Ansprüche, wobei die Menge des Bunte-Salzes sich auf 0,25 bis 25 Gewichtsprozent, alternativ 2 bis 10 Gewichtsprozent, auf Basis des Gewichts der Faser beläuft.

6. Reifen nach mindestens einem der vorgenannten Ansprüche, wobei das Polysulfid 2-Mercaptobenzothiazyldisulfid ist.

7. Reifen nach mindestens einem der vorgenannten Ansprüche, wobei die Menge des Polysulfids sich auf 0,01 bis 15 Gewichtsprozent, alternativ 0,1 bis 3 Gewichtsprozent, auf Basis des Gewichts der Faser beläuft.

8. Reifen nach mindestens einem der vorgenannten Ansprüche, wobei die Menge von Schwefel oder Schwefelspender sich auf 0,001 bis 10 Gewichtsprozent, alternativ 0,1 bis 2,5 Gewichtsprozent, auf Basis des Gewichts der Fasern beläuft.

9. Reifen nach mindestens einem der vorgenannten Ansprüche, wobei das Bauteil eine Wulstfahne ist.

10. Reifen nach Anspruch 9, wobei die Wulstfahne so angeordnet ist, dass die Fasern mindestens im Wesentlichen in einem Winkel ausgerichtet sind, der sich auf 0 bis 90 Grad, alternativ 0 bis 10 Grad, bezüglich der radialen Richtung des Reifens beläuft.

11. Reifen nach mindestens einem der vorgenannten Ansprüche, wobei die Kautschukzusammensetzung der vorliegenden Erfindung ein Spannungsverhältnis von größer als 1,5 bei 30 bis 50 Prozent Dehnung aufweist.

12. Reifen nach Anspruch 10, wobei die Kautschukzusammensetzung ein Spannungsverhältnis von größer als 2 bei 30 bis 50 Prozent Dehnung aufweist.

13. Reifen nach mindestens einem der vorgenannten Ansprüche, wobei die Aramidfasern eine Länge aufweisen, die sich auf 0,5 bis 20 mm beläuft, und eine Dicke aufweisen, die sich auf 2 bis 30 Mikron beläuft.

14. Reifen nach mindestens einem der vorgenannten Ansprüche, wobei die Kautschukzusammensetzung 5 bis 40 Gewichtsteile, je 100 Gewichtsteile Elastomer, an Aramidfasern aufweist.

15. Reifen nach mindestens einem der vorgenannten Ansprüche, wobei die Aramidfasern eine Länge aufweisen, die sich auf 1 bis 10 mm beläuft, und/oder eine Dicke aufweisen, die sich auf 5 bis 15 Mikron beläuft.

## Revendications

1. Bandage pneumatique comprenant au moins un composant choisi parmi le groupe constitué par des bourrages sur tringle, des bandelettes de protection et des renforts d'appui, ledit au moins un composant comprenant une composition de caoutchouc, la composition de caoutchouc comprenant un élastomère à base diénique et, à concurrence de 1 à 50 parties en poids, par 100 parties en poids d'élastomère, des fibres d'aramide, une composition étant disposée sur au moins une partie de la surface desdites fibres, ladite composition comprenant un acide gras aliphatique ou une cire microcristalline ; un sel de Bunte ; un polysulfure comprenant la fraction -[S]ₙ ou -[S]ₒ-Zn-[S]ₚ, chacun des indices o et p se situant dans la plage de 1 à 5, o + p = n, et n se situant dans la plage de 2 à 6 ; et un atome de soufre ou un composé cédant du soufre.

2. Bandage pneumatique selon la revendication 1, dans lequel l'acide gras aliphatique ou la cire microcristalline représente l'acide stéarique ou une cire de polyéthylène.

3. Bandage pneumatique selon la revendication 2, dans lequel l'acide stéarique représente de 10 à 90 % en poids, en variante de 30 à 70 % en poids de la totalité des fibres, de l'acide stéarique, du sel de Bunte, du polysulfure et du soufre ou du composé cédant du soufre.

4. Bandage pneumatique selon au moins une des revendications précédentes, dans lequel le sel de Bunte est l'hexaméthylène-1,6-bis(thiosulfate)dihydrate disodique.

5. Bandage pneumatique selon au moins une des revendications précédentes, dans lequel la quantité du sel de Bunte se situe dans la plage de 0,25 à 25 % en poids, en variante de 2 à 10 % en poids, basés sur le poids des fibres.

6. Bandage pneumatique selon au moins une des revendications précédentes, dans lequel le polysulfure est le disulfure de 2-mercaptobenzothiazyle.

7. Bandage pneumatique selon au moins une des revendications précédentes, dans lequel la quantité du polysulfure se situe dans la plage de 0,01 à 15 % en poids, en variante de 0,1 à 3 % en poids, basés sur le poids des fibres.

8. Bandage pneumatique selon au moins une des revendications précédentes, dans lequel la quantité du soufre ou du composé cédant du soufre se situe dans la plage de 0,001 à 10 % en poids, en variante de 0,1 à 2,5 % en poids, basés sur le poids des fibres.

9. Bandage pneumatique selon au moins une des revendications précédentes, dans lequel le composant est une bandelette de protection de tringle de talon.

10. Bandage pneumatique selon la revendication 9, dans lequel la bandelette de protection est disposée de telle sorte que les fibres sont essentiellement orientées en formant un angle dans la plage de 0 à 90°, en variante de 0 à 10° par rapport à la direction radiale du bandage pneumatique.

11. Bandage pneumatique selon au moins une des revendications précédentes, dans lequel la composition de caoutchouc de la présente invention possède un rapport des contraintes extrêmes supérieur à 1,5 à une déformation de 30 à 50 %.

12. Bandage pneumatique selon la revendication 10, dans lequel la composition de caoutchouc possède un rapport des contraintes extrêmes supérieur à 2 à une déformation de 30 à 50 %.

13. Bandage pneumatique selon au moins une des revendications précédentes, dans lequel les fibres d'aramide possèdent une longueur qui se situe dans la plage de 0,5 à 20 mm et possèdent une épaisseur qui se situe dans la plage de 2 à 30 microns.

14. Bandage pneumatique selon au moins une des revendications précédentes, dans lequel la composition de caoutchouc comprend des fibres d'aramide à concurrence de 5 à 40 parties en poids, par 100 parties en poids d'élastomère.

15. Bandage pneumatique selon au moins une des revendications précédentes, dans lequel les fibres d'aramide possèdent une longueur qui se situe dans la plage de 1 à 10 mm et/ou une épaisseur qui se situe dans la plage de 5 à 15 microns.
